# EUROPEAN PATENT APPLICATION

(11) **EP 2 306 225 A1**
(43) Date of publication of application: **06.04.2011**
(21) Application number: 09800402.1
(22) Date of filing: 22.07.2009
(51) Int. Cl.: G02B 6/42, G01M 11/02, G02B 6/00

(54) **HOT LINE DETECTION DEVICE**

(30) Priority: 25.07.2008 JP 2008192758; 25.07.2008 JP 2008192759; 25.07.2008 JP 2008192760
(71) Applicant: Panasonic Electric Works Co., Ltd., Kadoma-shi Osaka 571-8686 (JP)
(72) Inventor: UCHIDA, Yuichi, Kadoma-shi Osaka 571-8686 (JP)
(74) Representative: Müller-Boré & Partner Patentanwälte
(86) International application number: PCT/JP2009/063089
(87) International publication number: WO 2010/010888

(57) **Abstract**

A light leakage generation portion 3 is formed at a portion of connection by connecting two optical fibers 1 and 1 so that a refractive index distribution of the optical fibers 1 and 1 in the portion of connection is different from a refractive index distribution thereof in another portion, and a part of a light propagating a core of one optical fiber 1 (optical fiber 1 on the right side in the example shown) is leaked into a clad 12 of the other optical fiber 1 (optical fiber 1 on the left side in the example shown). A light receiving element chip 5 adheres to an outer circumferential surface of the clad 12 of the other optical fiber 1 via a transparent adhesive layer 4 constituted by transparent adhesive so as to detect light leaked by the light leakage generation portion 3.

## Description

### Technical Field

The present invention relates to a hot line detection device which detects whether an optical line created by connecting the respective one end of two optical fibers is in a hot line state or not.

### Background Art

In the optical fiber communication technology field, a hot line detection device, which detects whether an optical line created by optical fibers for optical communication, housed in an optical termination box installed in a station, building, house or the like, is in the hot line state or not, has been known. For such a hot line detection device, a hot line detection device which can detect a hot line state without bending the optical fiber, for example, has been proposed (e.g. see Patent Document 1). Here a hot line state refers to a state in which the optical line transmits light normally.

This hot line detection device can detect a hot line state without bending the optical fiber, so a break in the optical fiber by bending the optical fiber, and the generation of transmission errors due to a temporary increase in transmission loss, can be prevented.

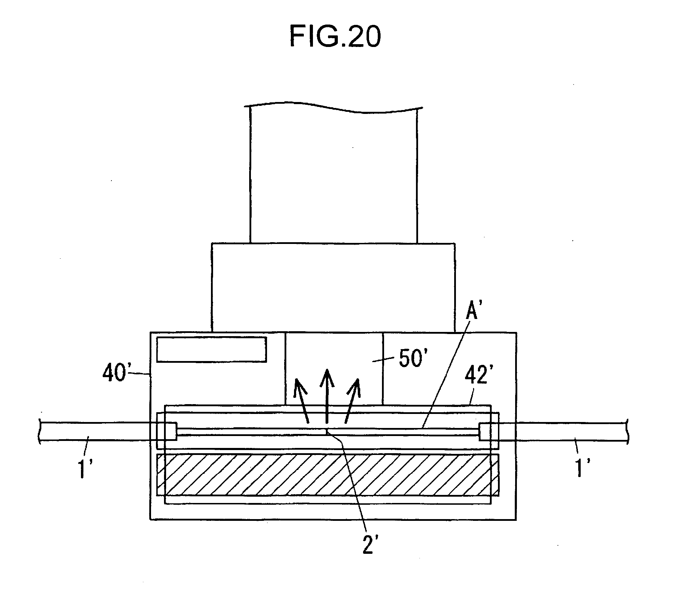

Fig. 20 is a diagram depicting a configuration of a conventional hot line detection device according to Patent Document 1. As Fig. 20 shows, the conventional hot line detection device has a fusion reinforcing sleeve 42' which protects a fused portion 2' which was created by fusing a respective one end of two optical fibers 1' and 1' constituting the optical line A', and leaks the light leaking from the fused portion 2', a case 40' which houses the fusion reinforcing sleeve 42' and leads each optical fiber 1'and 1' out, and a photo-detection portion 50' which is inserted into the opening of the case 40' so as to detect the light leaked from the fused portion 2' through the fusion reinforcing sleeve 42' using a light receiving element (not illustrated).

To fuse the respective one end of the two optical fibers 1' and 1', the two optical fibers 1' and 1' are normally fused so that the connection loss due to axial discrepancy and angular discrepancy of an optical axis of the two optical fibers 1' and 1' is minimized. Therefore the connection loss is about 0.2 dB at a 1310 nm wavelength in the fused portion 2' shown in Fig. 20.

However in the case of optical communication, the power of the light that propagates the optical fiber spreads over a wide range, and could decrease to about - 20 dBm, and in such a case, the power of the light leaked from the fused portion 2' becomes low. Furthermore the distance between the light receiving element installed outside the fusion reinforcing sleeve 42' and the fused portion 2' is long. For these reasons, the power of the light that reaches the light receiving surface of the light receiving element drops, and as a result, the light receiving efficiency decreases and the S/N ratio decreases, which makes it difficult to detect a hot line.

It is an object of the present invention to provide a hot line detection device which can perform more stable hot line detection.

Patent Document 1: Japanese Patent Application Laid-open No. 2007-85934

### Disclosure of the Invention

A hot line detection device according to an aspect of the present invention is a hot line detection device for detecting whether an optical line, including two optical fibers, is in a hot line state or not, including: a light leakage generation portion which is formed by connecting the two optical fibers so that a refractive index distribution in a portion of connection of the two optical fibers is different from a refractive index distribution of another portion in an optical axis direction, and which leaks a part of a light propagating a core of one optical fiber into a clad of the other optical fiber; and a light receiving element which adheres to an outer circumferential surface of the clad of the other optical fiber via a transparent adhesive layer so as to detect a light leaked by the light leakage generation portion.

### Brief Description of the drawings

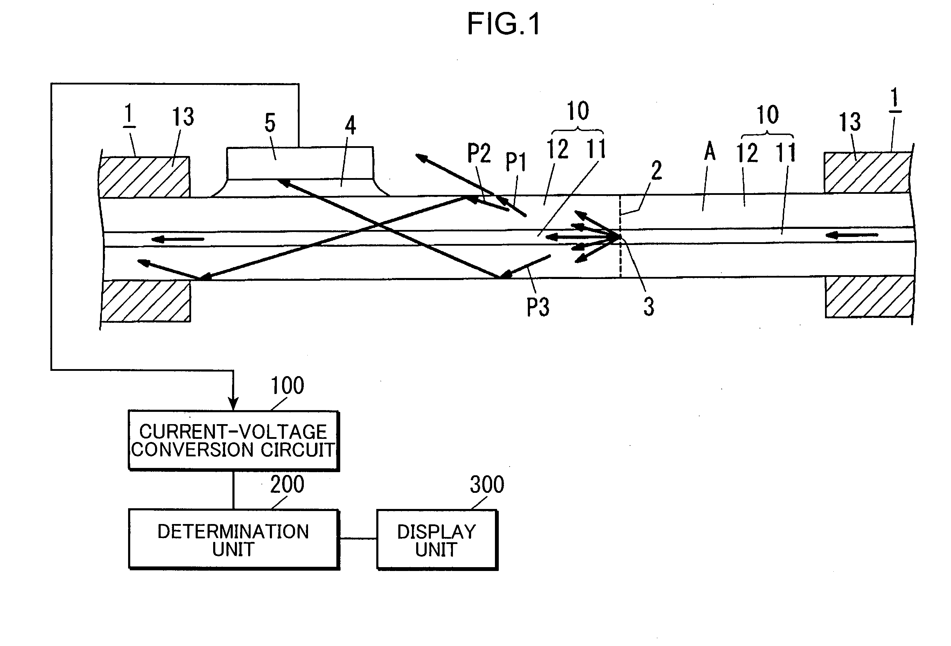

[Fig. 1] Fig. 1 is a diagram depicting a general configuration of a hot line detection device according to Embodiment 1 of the present invention.

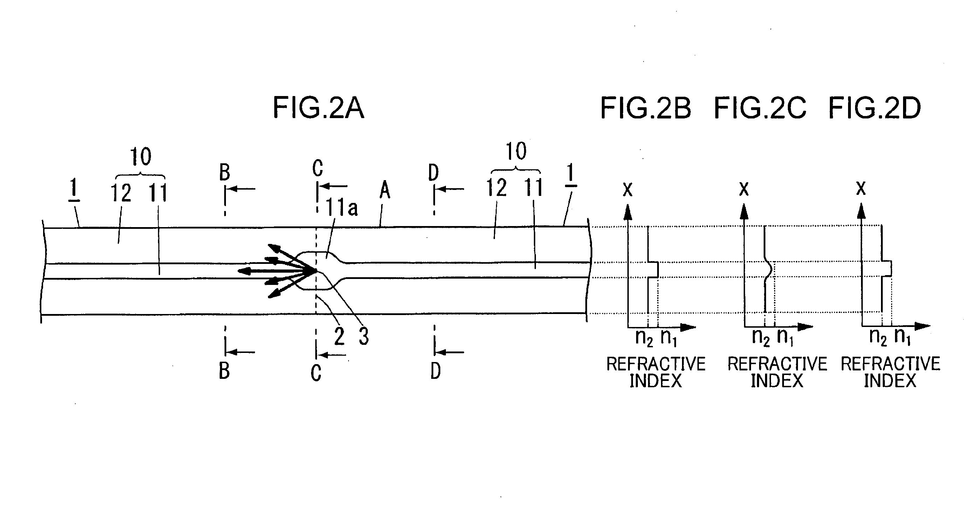

[Fig. 2] Fig. 2A to Fig. 2D are diagrams depicting the refractive index distribution in the case of using a single mode fiber as the optical fibers, where Fig. 2A shows a general configuration of the optical fibers, Fig. 2B shows the refractive index distribution of the B-B cross-section in Fig. 2A, Fig. 2C shows the refractive index distribution of the C-C cross-section in Fig. 2A, and Fig. 2D shows the refractive index distribution of the D-D cross-section in Fig. 2A.

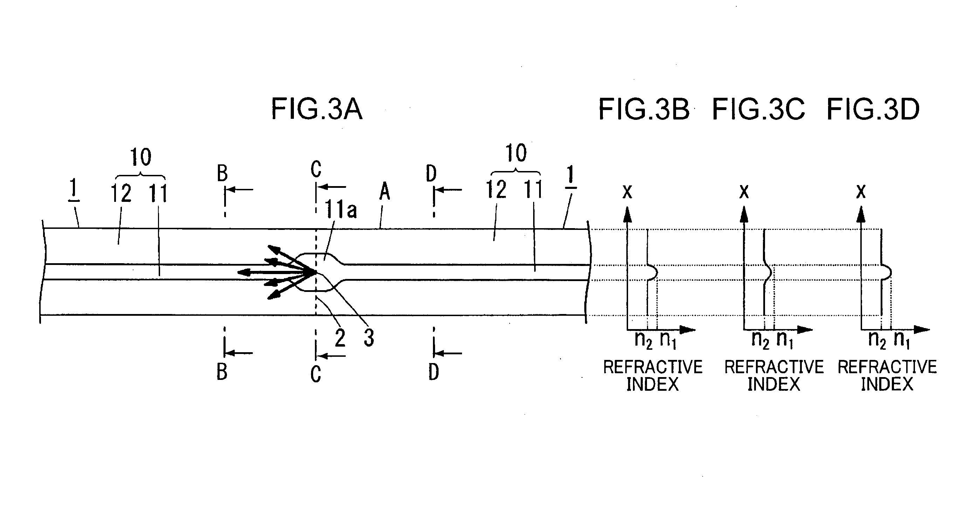

[Fig. 3] Fig. 3A to Fig. 3D are diagrams depicting the refractive index distribution in the case of using a GI type multi-mode fiber as the optical fibers, where Fig. 3A shows the general configuration of the optical fibers, Fig. 3B shows the refractive index distribution of the B-B cross-section in Fig. 3A, Fig. 3C shows the refractive index distribution of the C-C cross-section in Fig. 3A, and Fig. 3D shows the refractive index distribution of the D-D cross-section in Fig. 3A.

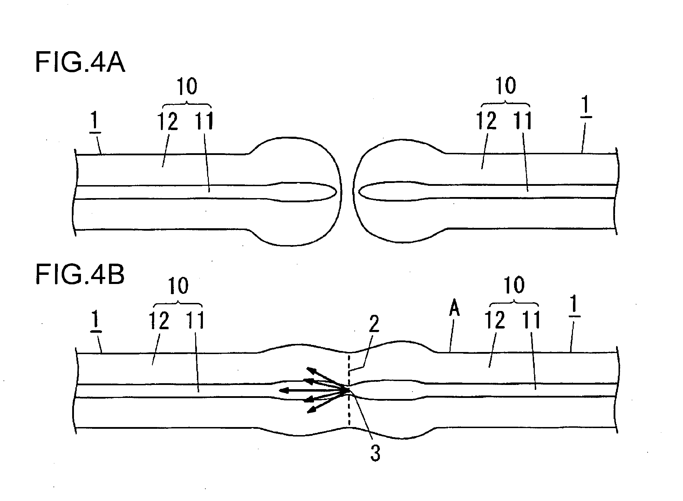

[Fig. 4] Fig. 4A and Fig. 4B are diagrams depicting a hot line detection device according to Embodiment 2 of the present invention.

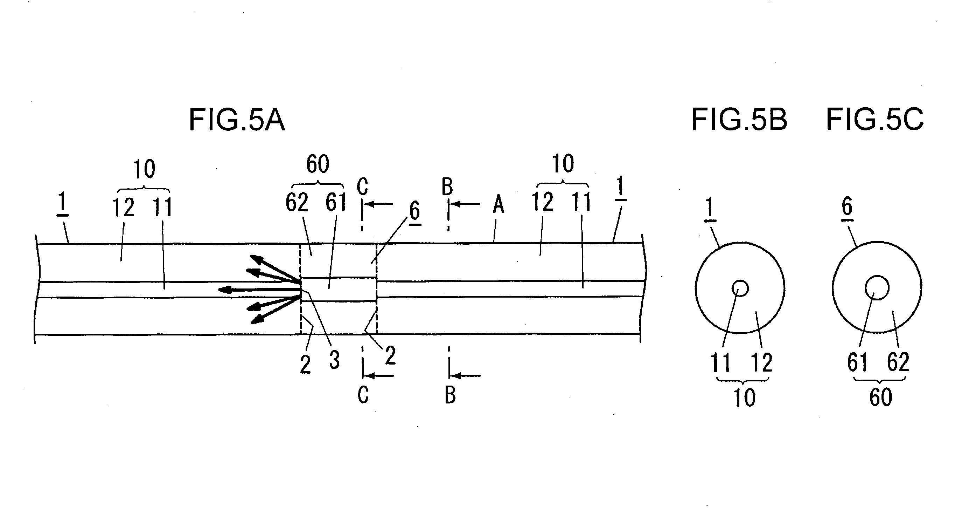

[Fig. 5] Fig. 5A is a diagram depicting a general configuration of a hot line detection device according to Embodiment 3 of the present invention, Fig. 5B is a cross-sectional view of the B-B cross-section of the optical fiber, and Fig. 5C is a cross-sectional view of the C-C cross-section of the light leakage generation optical fiber.

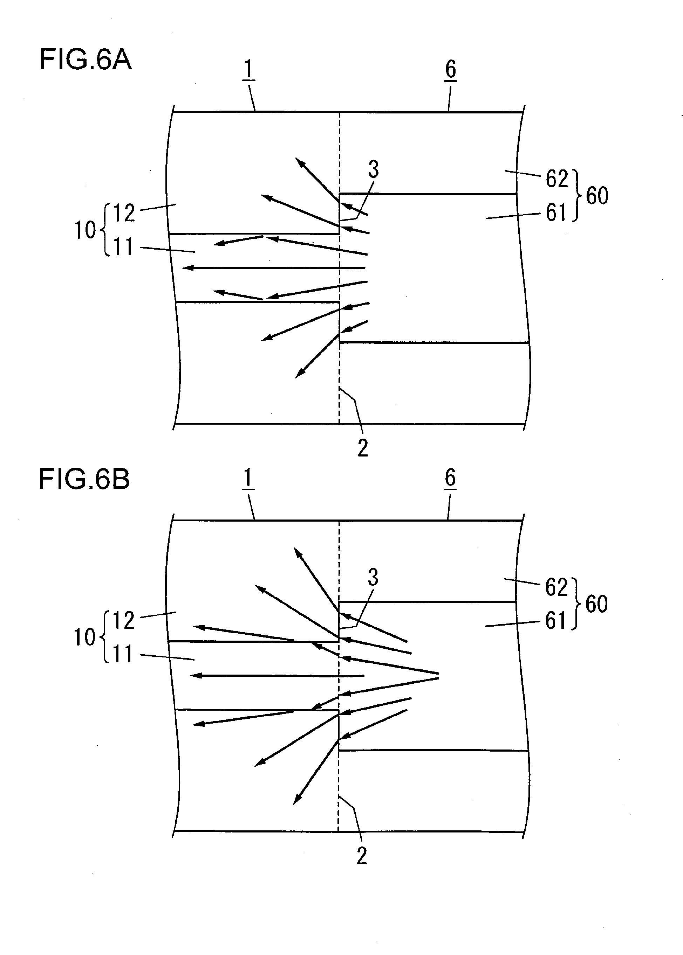

[Fig. 6] Fig. 6A and Fig. 6B are enlarged views of the fused portion shown in Fig. 5.

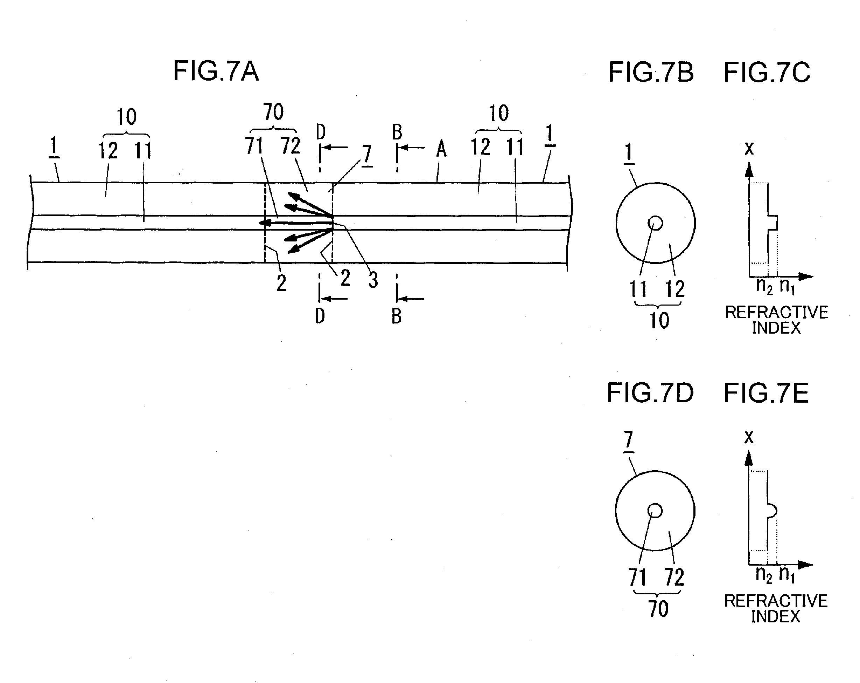

[Fig. 7] Fig. 7A is a diagram depicting a general configuration of a hot line detection device according to Embodiment 4 of the present invention, Fig. 7B is a cross-sectional view of the B-B cross-section in Fig. 7A, Fig. 7C shows the refractive index distribution of the B-B cross-section, Fig. 7D is a cross-sectional view of the D-D cross-section in Fig. 7A, and Fig. 7E shows the refractive index distribution of the D-D cross-section.

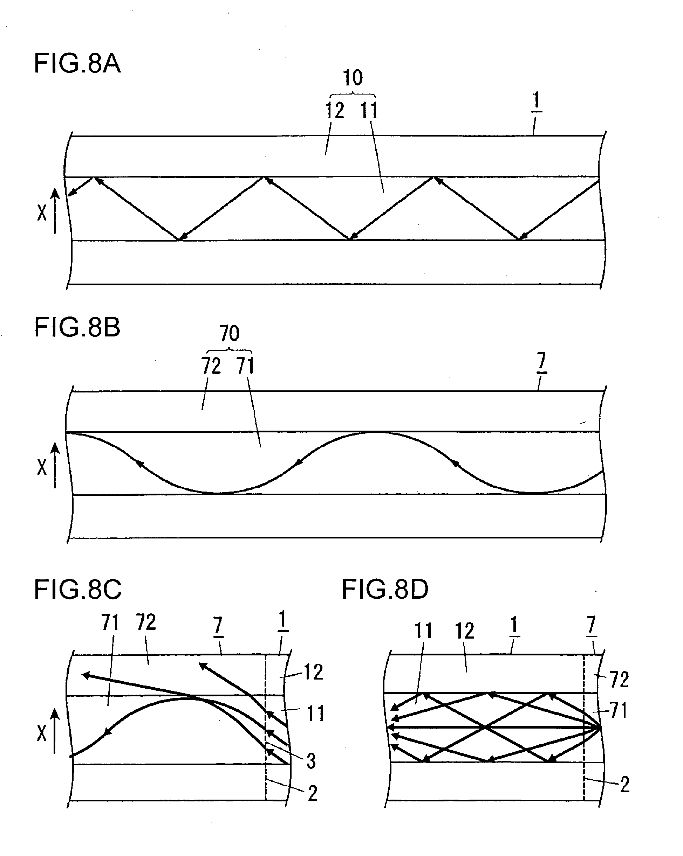

[Fig. 8] Fig. 8A is a diagram depicting an optical path of an SI type multi-mode fiber, Fig. 8B is a diagram depicting an optical path of a GI type multi-mode fiber, Fig. 8C is a diagram depicting the optical path near the fused portion at the right side in Fig. 7A, and Fig. 8D is a diagram depicting the optical path near the fused portion at the left side in Fig. 7A.

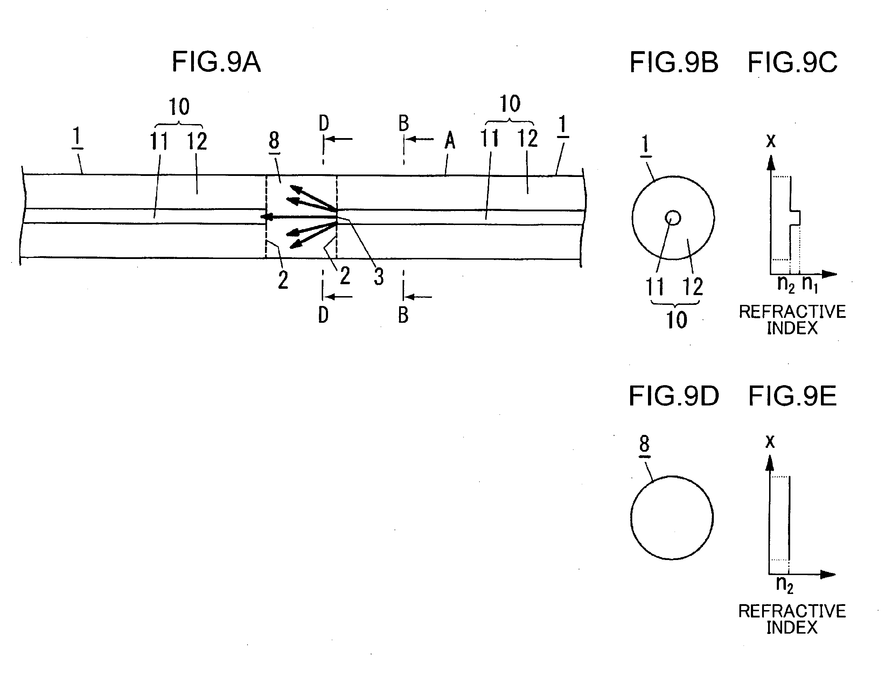

[Fig. 9] Fig. 9A is a diagram depicting a general configuration of a hot line detection device according to Embodiment 5 of the present invention, Fig. 9B is a cross-sectional view of the B-B cross-section in Fig. 9A, Fig. 9C shows the refractive index distribution of the B-B cross-section, Fig. 9D is a cross-sectional view of the D-D cross-section in Fig. 9A, and Fig. 9E shows the refractive index distribution of the D-D cross-section.

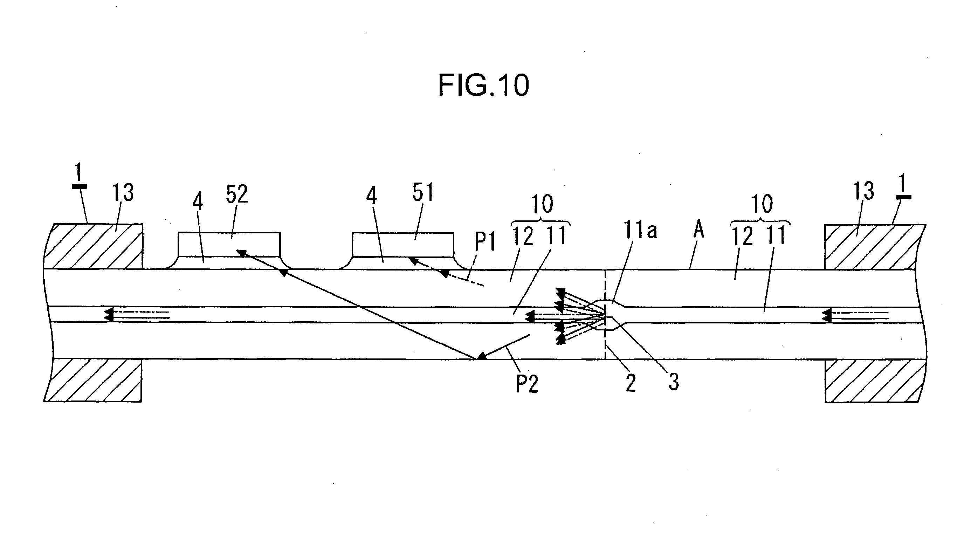

[Fig. 10] Fig. 10 is a diagram depicting a general configuration of a hot line detection device according to Embodiment 6 of the present invention.

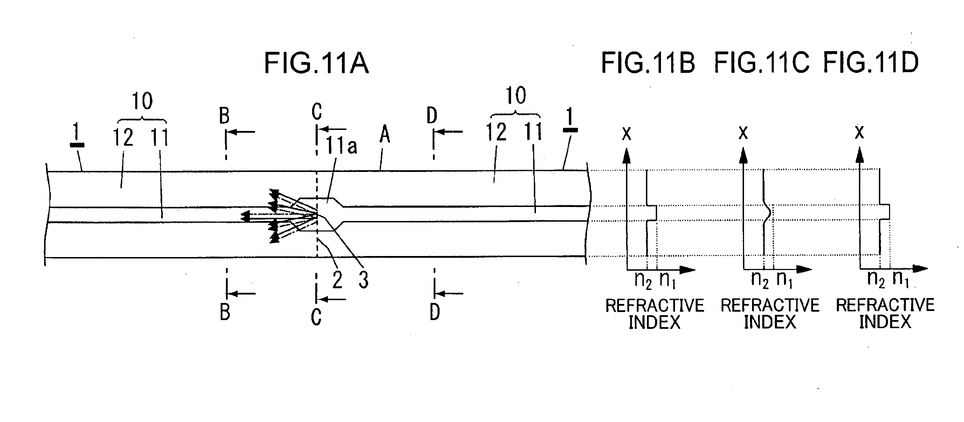

[Fig. 11] Fig. 11A to Fig. 11D are diagrams depicting the refractive index distribution in the case of using a single mode fiber as the optical fibers, where Fig. 11A shows a general configuration of the optical fibers, Fig. 11B shows the refractive index distribution of the B-B cross-section in Fig. 11A, Fig. 11C shows the refractive index distribution of the C-C cross-section in Fig. 11A, and Fig. 11D shows the refractive index distribution of the D-D cross-section in Fig. 11A.

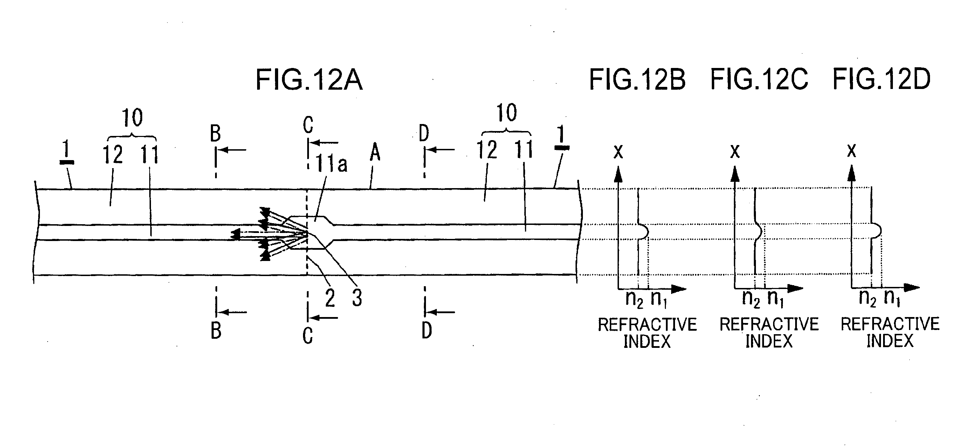

[Fig. 12] Fig. 12A to Fig. 12D are diagrams depicting the refractive index distribution in the case of using a GI type multi-mode fiber as the optical fibers, where Fig. 12A shows the general configuration of the optical fibers, Fig. 12B shows the refractive index distribution of the B-B cross-section in Fig. 12A, Fig. 12C shows the refractive index distribution of the C-C cross-section in Fig. 12A, and Fig. 12D shows the refractive index distribution of the D-D cross-section in Fig. 12A.

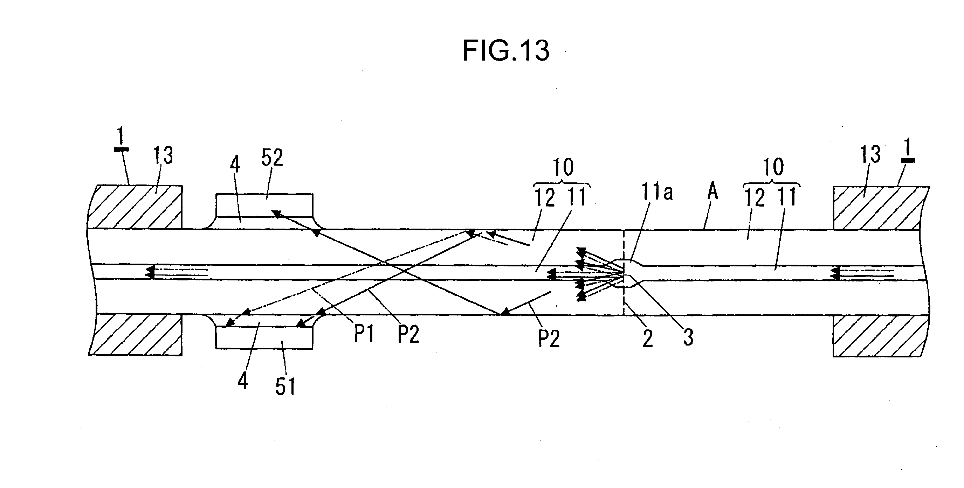

[Fig. 13] Fig. 13 is a diagram depicting a general configuration of a hot line detection device according to Embodiment 7 of the present invention.

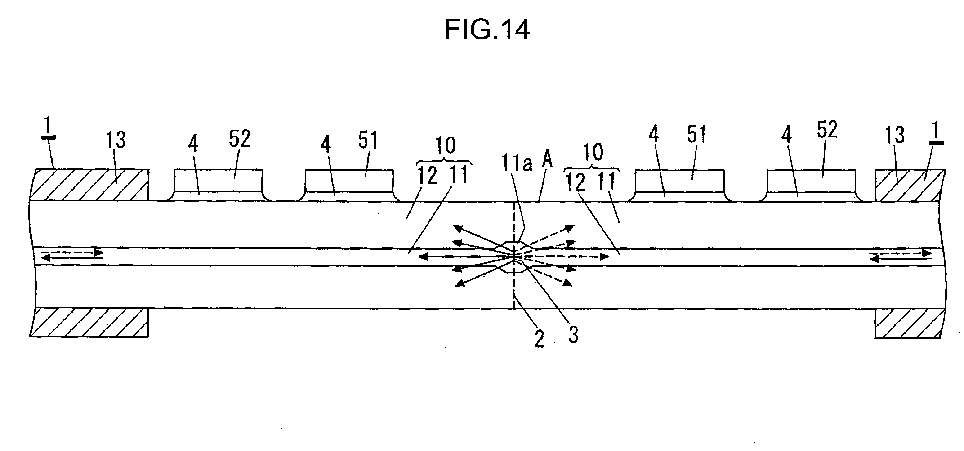

[Fig. 14] Fig. 14 is a diagram depicting a general configuration of a hot line detection device according to Embodiment 8 of the present invention.

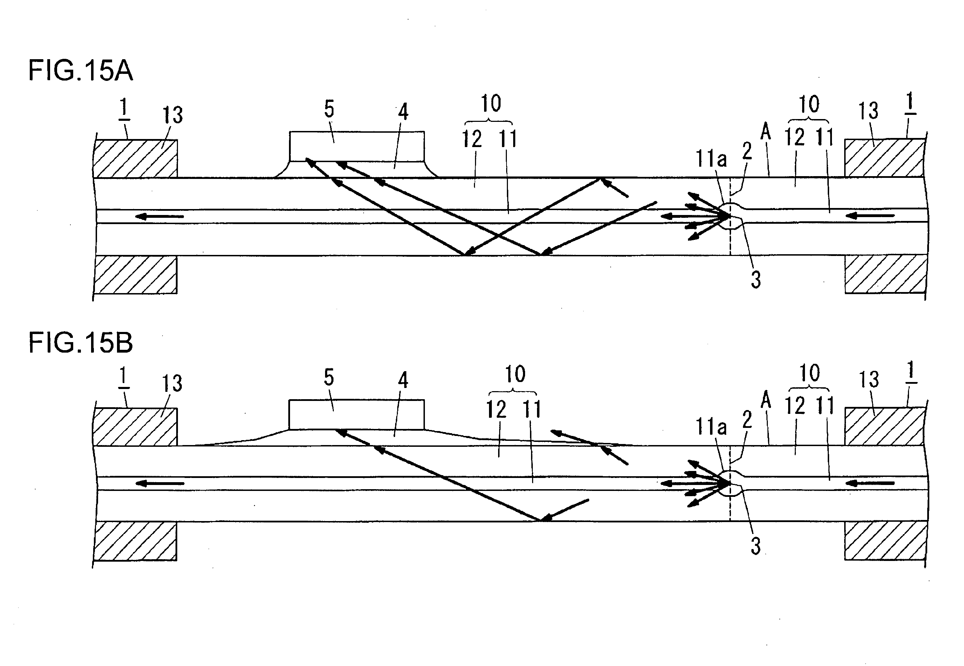

[Fig. 15] Fig. 15A is a diagram depicting a general configuration of a hot line detection device according to Embodiment 9 of the present invention, and Fig. 15B is a diagram depicting a general configuration of a comparison example of the hot line detection device according to Embodiment 9 of the present invention.

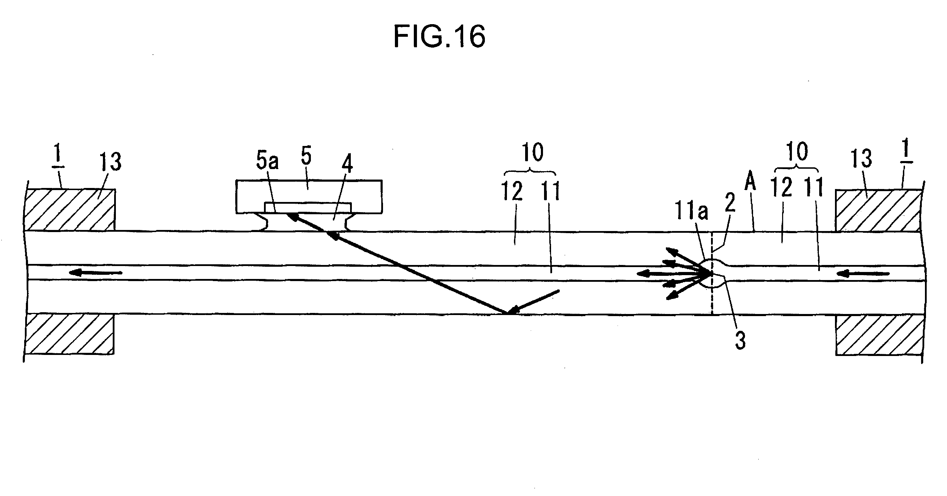

[Fig. 16] Fig. 16 is a diagram depicting a general configuration of a hot line detection device according to Embodiment 10 of the presente invention.

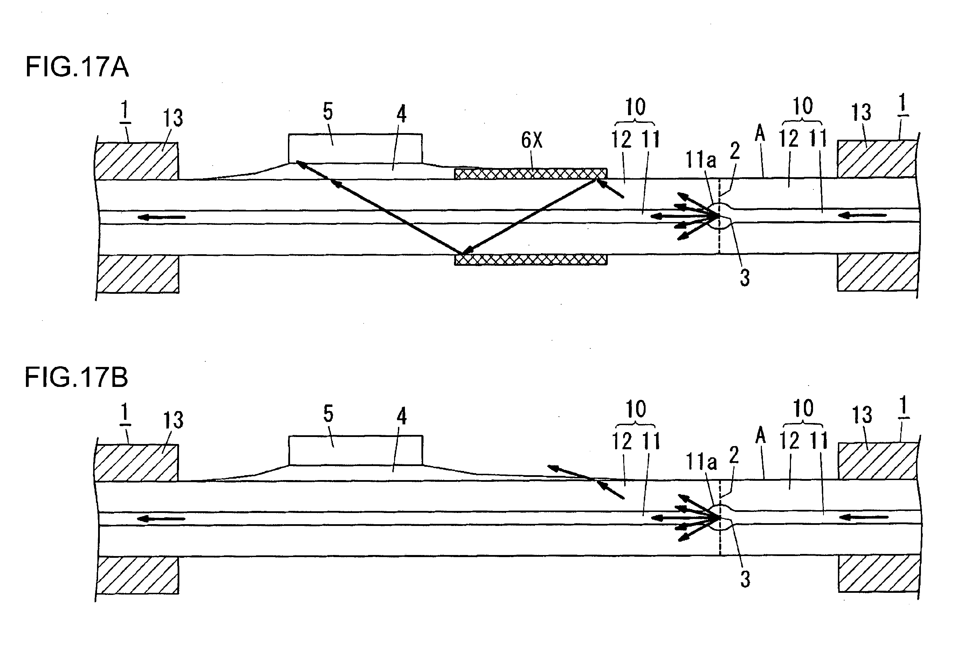

[Fig. 17] Fig. 17A is a diagram depicting a general configuration of a hot line detection device according to Embodiment 11 of the present invention, and Fig. 17B is a diagram depicting a general configuration of a comparison example of the hot line detection device according to Embodiment 11 of the present invention.

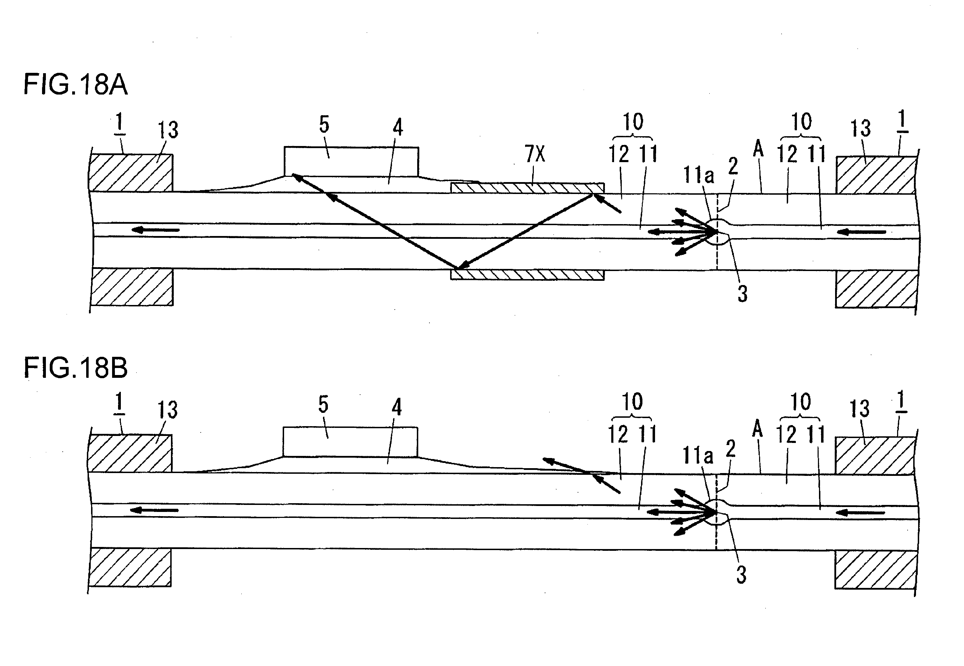

[Fig. 18] Fig. 18A is a diagram depicting a general configuration of a hot line detection device according to Embodiment 12 of the present invention, and Fig. 18B is a diagram depicting a general configuration of a comparison example of the hot line detection device according to Embodiment 12 of the present invention.

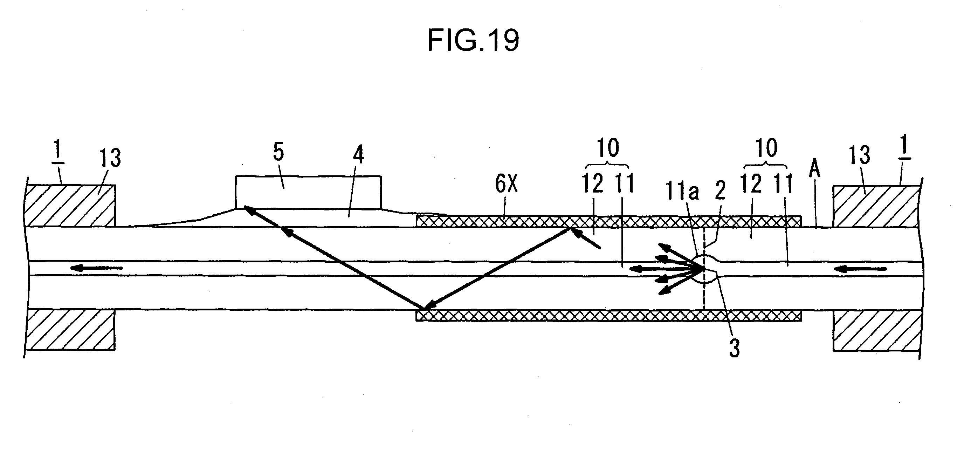

[Fig. 19] Fig. 19 is a diagram depicting a general configuration of a hot line detection device according to Embodiment 13 of the present invention.
[Fig. 20] Fig. 20 is a diagram depicting a configuration of a conventional hot line detection device.

### Best Mode for Carrying Out the Invention

### (Embodiment 1)

Fig. 1 is a diagram depicting a general configuration of a hot line detection device according to Embodiment 1 of the present invention. As Fig. 1 shows, this hot line detection device is a hot line detection device for detecting whether an optical line A formed by connecting a respective one end of the two optical fibers 1 and 1 is in the hot line state or not, and has the optical fibers 1 and 1, a light leakage generation portion 3, a light receiving element chip 5 (an example of a light receiving element), a current-voltage conversion circuit 100, a determination unit 200 and a display unit 300. In the diagrams depicting the configuration of a hot line detection device other than Fig. 1, the current-voltage conversion circuit 100, determination unit 200 and display unit 300 are omitted.

The light leakage generation portion 3 is formed in a connected portion by connecting the optical fibers 1 and 1 so that the refractive index distribution of the connected portion of the two optical fibers 1 and 1 is different from the refractive index distribution of the other portion in the optical axis direction, and leaks a part of the light propagating the core of one optical fiber 1 (optical fiber 1 at the right side in the example shown) into the clad 12 of the other optical fiber 1 (optical fiber 1 at the left side in the example shown).

The light receiving element chip 5 adheres to an outer circumferential surface of the clad 12 of the other optical fiber 1, that is, to an outer circumferential surface of a wire 10 constituted by the core 11 and the clad 12, via a transparent adhesive layer 4 (an example of a transparent adhesive layer) constituted by transparent adhesive, so as to detect light leaked by the light leakage generation portion 3.

The optical fibers 1 and 1 are connected by fusing the respective one end, and a fused portion 2 is formed in the connected portion of the optical fibers 1 and 1, and a light leakage generation portion 3 is formed in this fused portion 2. The bold arrow marks in Fig. 1 show light propagating directions.

The current-voltage conversion circuit 100 is constituted by an operational amplifier, for example, and converts a current signal, which is output from the light receiving element chip 5, into a voltage signal.

The determination unit 200 is constituted by a microcomputer or IC (Integrated Circuit) enclosing a resistor, capacitor, amplification circuit or the like, for example, and determines whether the optical line A is in the hot line state or not based on the voltage signal which is output from the current-voltage conversion circuit 100, and has the display unit 300 display the determination result. The display unit 300 is constituted by a liquid crystal display panel or a light emitting diode, for example, and displays the determination result by the determination unit 200.

In the present embodiment, quartz glass fiber, which excels in propagation loss, transmission bandwidth and such environmental resistance as mechanical strength, for example, are used for the optical fibers 1 and 1. In the present embodiment, a single mode fiber is used for the quartz glass fiber. This, however, is an example, and a step-index type (SI type) multi-mode fiber, grated-index type (GI type) multi-mode fiber, or other special fibers which can form the light leakage generation portion 3 may be used, instead of a single mode fiber. For the optical fibers 1 and 1, a multi-component glass fiber, or plastic fiber, for example, may be used instead of quartz glass fiber.

As Fig. 1 shows, coating 13 is removed in the fused portion 2 side of the optical fibers 1 and 1 respectively, where the wire 10 is exposed. The light receiving element chip 5 adheres to the outer circumferential surface of the wire 10, that is, the outer circumferential surface of the clad 12 via the transparent adhesive layer 4, so that the light receiving surface faces the clad 12 side of the other optical fiber 1.

Here in optical fibers 1 and 1, the length of the portion where the outer circumferential surface of the wire 10 is exposed is about 10 mm, and the light receiving element chip 5 is disposed at a predetermined length (e.g. about 2 to 5 mm) away from the light leakage generation portion 3 in the optical axis direction of the other optical fiber 1.

As a light that propagates the optical fiber 1, a light of which wavelength is 1550 nm, a light of which wavelength is 1310 nm, or a light of which wavelength is 850 nm, for example, is assumed, and the transparent adhesive layer 4 is formed by an epoxy resin or acrylic resin adhesive, which is transparent to light having these wavelengths. The transparent adhesive layer 4 need not be formed by a material having a refractive index that is higher than the clad 12, but may be formed by a material having an intermediate refractive index between air and the clad 12.

For the light receiving element chip 5, a photodiode chip, for example, can be used. If the wavelength of the light which propagates the optical fiber 1, that is, the light used for optical communication, is in a 1 µm band wavelength area (e.g. 1510 nm, 1310 nm), then an InGaAs photodiode chip which has a high light receiving sensitivity in a 1 µm band wavelength area can be used.

If the wavelength of the light which propagates the optical fiber 1 is light in a 0.8 µm band width area (e.g. 850 nm), then an Si photodiode chip, which has a high light receiving sensitivity in the 0.8 µm band wavelength area, can be used.

If the light which propagates the optical fiber 1 is a light in a 1 µm band wavelength area and 0.8 µm band wavelength area, then a light receiving element chip 5 having a high light receiving sensitivity in each wavelength area can be set individually.

Now the refractive index distribution of the optical line A will be described with reference to Fig. 2A to Fig. 2D. Fig. 2A to Fig. 2D are diagrams depicting the refractive index distribution in the case of using a single mode fiber as the optical fibers 1 and 1, Fig. 2A shows the skeleton framework of the optical fibers 1 and 1, Fig. 2B shows the refractive index distribution of the B-B cross-section in Fig. 2A, Fig. 2C shows the refractive index distribution of the C-C cross-section in Fig. 2A, and Fig. 2D shows the refractive index distribution of the D-D cross-section in Fig. 2A. The x direction is the direction which intersects orthogonally with the optical axis direction.

Fig. 2B and Fig. 2D show the refractive index distribution of portions which are not melted when the optical fibers 1 and 1 are fused, and show a step-formed refractive index distribution, which is an original refractive index distribution of the optical fibers 1 and 1.

Whereas in the refractive index distribution in Fig. 2C, the refractive index gradually decreases as the area moves away from the center, and includes an area in which the refractive index is lower than the refractive index n1 of the core 11, and is higher than the refractive index n2 of the clad 12. The length of this area in the x direction is longer than the core diameter (diameter) of the optical fibers 1 and 1. The refractive index distribution in the case of using this SI type multi-mode fiber for the optical fibers 1 and 1 is also the same as the refractive index distribution in Fig. 2B to Fig. 2D.

Fig. 3A to Fig. 3D are diagrams depicting the refractive index distribution in the case of using a GI type multi-mode fiber for the optical fibers 1 and 1, where Fig. 3A shows the general configuration of the optical fibers 1 and 1, Fig. 3B shows the refractive index distribution of the B-B cross-section in Fig. 3A, Fig. 3C shows the refractive index distribution of the C-C cross-section in Fig. 3A, and Fig. 3D shows the refractive index distribution of the D-D cross-section in Fig. 3A.

Fig. 3B and Fig. 3D show the refractive index distribution of portions which did not melt when the optical fibers 1 and 1 are fused, and show a refractive index distribution gradually decreasing with a square distribution from the center to the outside, which is an original refractive index distribution of the optical fibers 1 and 1. Whereas in the refractive index distribution in Fig. 3C, the refractive index gradually decreases as the area moves away from the center, and includes an area in which the refractive index is lower than the refractive index n1 of the core 11 and is higher than the refractive index n2 of the clad 12. The length of this area in the x direction is longer than the diameter of the core of the optical fibers 1 and 1.

Here the light leakage generation portion 3 is formed by fusing the optical fibers 1 and 1, as shown in Fig. 2A and Fig. 3A, so that an intermediate refractive index area 11a, in which the refractive index is higher than the refractive index n2 of the clad 12 and is lower than the refractive index n1 of the core 11 in the other portions in the optical axis direction, is formed near the fused portion 2.

To fuse the respective one end of the optical fibers 1 and 1, the end faces of the respective one end of the optical fibers 1 and 1 are butted, and heated and melted by an arc discharge or the like, and are then cooled down so that the two optical fibers 1 and 1 are connected.

Thereby during the heating and melting, the core 11 and the clad 12 change from a solid phase to a liquid phase, even for a short time, and are mixed, and an area having an intermediate refractive index between the refractive index of the core 11 and the refractive index of the clad 12 is formed. The intermediate refractive index area 11a can be formed to have a desired size by appropriately changing the conditions (e.g. temperature, time) during fusing from the conditions by which connection loss is minimized.

In Fig. 3, optical paths of the leaked light generated in the light leakage generation portion 3 are shown by arrow marks. In other words, out of the leaked light generated in the light leakage generation portion 3, the ray P1, of which supplementary angle of incidence in the boundary between the clad 12 and air is greater than the total reflection critical supplementary angle, is leaked from the clad 12 and emitted outside, but rays P2 and P3, of which supplementary angle of incidence is smaller than the total reflection critical supplementary angle, are totally reflected by the boundary between air and the clad 12.

If quartz glass fibers are used for the optical fibers 1 and 1 as this embodiment, the difference of the refractive indexes between the clad 12 and air is large, therefore the a large percent of the leaked light generated in the light leakage generation portion 3 is totally reflected by the boundary between the clad 12 and air, and most of the leaked light propagates as rays P2 and P3.

The ray P2 indicates a ray which propagates through the wire 10 while repeating the total reflection. The difference of the refractive indexes between the clad 12 and the transparent adhesive layer 4 is smaller than the difference of the refractive indexes between the clad 12 and air, therefore a small percent of light is totally reflected by the interface between the clad 12 and the transparent adhesive layer 4, and most of the light which reached the interface of the clad 12 and the transparent adhesive layer 4 reaches the light receiving surface of the light receiving element chip 5.

The ray P3 indicates a ray which is totally reflected only once by the boundary of the clad 12 and air, then transmits through the interface of the clad 12 and the transparent adhesive layer 4, and reaches the light receiving surface of the light receiving element chip 5. In Fig. 1, an example of the ray P3, which is totally reflected only once, is shown, but the present invention is not limited to this, and the ray P3 may be totally reflected a plurality of times by the boundary between the clad 12 and air, then transmit through the interface of the clad 12 and the transparent adhesive layer 4, and reach the light receiving surface of the light receiving element chip 5.

As described above, the hot line detection device according to the present embodiment has a light leakage generation portion 3 which is formed in a connected portion by connecting the optical fibers 1 and 1, so that the refractive index distribution of the connected portion of the two optical fibers 1 and 1 is different from the refractive index distribution of the other portion in the optical axis direction, and leaks a part of the light propagating the core of one optical fiber 1 into the clad 12 of the other optical fiber 1.

Therefore compared with the prior art shown in Fig. 20, in which the optical fibers 1' and 1' are fused so that the connection loss is minimized, the absolute quantity of the leaked light can be increased. Also in the case of the hot line detection device according to the present embodiment, the light receiving element chip 5 adheres to the outer circumferential surface of the clad 12 of the other optical fiber 1 via the transparent adhesive layer 4. Therefore compared with the case of the prior art shown in Fig. 20, where the fusion reinforcing sleeve 42' or the like intervenes, the distance between the light receiving element chip 5 and the outer circumferential surface of the clad 12 can be decreased, and the efficiency of the leaked light reaching the light receiving element chip 5 can be improved.

Furthermore, air does not intervene between the light receiving element chip 5 and the outer circumferential surface of the clad 12 of the other optical fiber 1, so considerable leaked light can enter from the clad 12 to the transparent adhesive layer 4, of which refractive index is greater than that of air, and the efficiency of the leaked light reaching the light receiving element chip 5 can be improved.

As a result, the hot line can be detected regardless the intensity of power of the light propagating the optical line A. In other words, the hot line can be detected not only when the power of the light propagating the optical line A is high, but also when the power of the light is low, and more stable hot line detection becomes possible.

If the distance between the light receiving element chip 5 and the light leakage generation portion 3 is too short, the light intensity distribution of the leaked light from the light leakage generation portion 3 may directly influence the output current from the light receiving element chip 5, and the output current of the light receiving element chip 5 may disperse.

However according to the present embodiment, the light receiving element chip 5 is disposed at a predetermined length (e.g. about 2 to 5 mm) distant from the light leakage generation portion 3 in the optical axis direction. Therefore by the leaked light generated in the light leakage generation portion 3 repeating total reflection, the light intensity distribution is equalized, and dispersion of the output current of the light receiving element chip 5 can be suppressed, and as a result, stable output from the light receiving element chip 5 can be obtained.

Also in the hot line detection device of the present embodiment, the light leakage generation portion 3 is formed by fusing the optical fibers 1 and 1 so as to form the intermediate refractive index area I la. Therefore the refractive index distribution locally changes in the light propagation direction, and the light intensity distribution also changes as the light passes through the fused portion 2, and a part of the light can be leaked from the core 11 to the clad 12 as leaked light from the light leakage generation portion 3.

Therefore by adjusting the size of the intermediate refractive index area 11a, to control the refractive index distribution when the optical fibers 1 and 1 are fused, the leaked light required for hot line detection can be obtained. In other words, according to the hot line detection device of the present embodiment, the leaked light can be guided to the light receiving element chip 5 without adding a separate element for light leakage generation.

### (Embodiment 2)

Fig. 4A and Fig. 4B are diagrams depicting a hot line detection device according to Embodiment 2 of the present invention. The basic configuration of the hot line detection device of the present embodiment is generally the same as Embodiment 1. The difference is as follows. First before fusing the two optical fibers 1 and 1, the respective one end is independently fused, as shown in Fig. 4A, so that the refractive index distribution of the connected portion is different from the other portion, and is different from the original refractive index distribution of the optical fibers 1 and 1. Then as Fig. 4B shows, the respective one end of the optical fibers 1 and 1 are fused with each other to form the fused portion 2, so that the light leakage generation portion 3 is formed. Illustration and description of the other configuration, which is the same as Embodiment 1, are omitted.

As described in Embodiment 1, the intermediate refractive index area 11a is formed by the cores 11 and 11 and the clads 12 and 12 being mixed as the optical fibers 1 and 1 melt when the respective one end of the two optical fibers 1 and 1 are fused with each other, but the intermediate refractive index area 11a cannot be increased so much merely by changing the conditions of fusion.

Whereas in the present embodiment, before fusing the respective one end of the two optical fibers 1 and 1 with each other, as shown in Fig. 4A, the respective one end of each optical fiber 1 is transformed to a sphere of which diameter is greater than the diameter of the wire 10, so that the core diameter of each optical fiber 1 continuously changes in the optical axis direction.

Therefore according to the hot line detection device of the present embodiment, the light leakage generation portion 3 can be formed with more certainty, and the range of the area, where the light leakage generation portion 3 is formed in the cross-section that intersects the optical axis direction orthogonally, can be increased, and the quantity of leaked light required for the hot line detection can be further increased.

### (Embodiment 3)

The basic configuration of a hot line detection device of Embodiment 3 is generally the same as Embodiment 1, and the difference is that, as Fig. 5 shows, the light leakage generation portion 3 is formed by connecting the respective one end of the optical fibers 1 and 1 so as to sandwich a light leakage generation optical fiber 6, of which core diameter is different from those of the optical fibers 1 and 1. Illustration and description of the other configuration, which is the same as Embodiment 1, are omitted.

Fig. 5A is a diagram depicting a general configuration of a hot line detection device according to Embodiment 3 of the present invention, Fig. 5B is a cross-sectional view of the B-B cross-section of the optical fiber 1, and Fig. 5C is a cross-sectional view of the C-C cross-section of the light leakage generation optical fiber 6.

Fig. 6A and Fig. 6B are enlarged views of the fused portion 2 shown in Fig. 5. The light leakage generation optical fiber 6 is formed by quartz glass fiber, just like the optical fibers 1 and 1. The outer diameter of the clad 62 of the light leakage generation optical fiber 6 is the same as the outer diameter of the clads 12 and 12 of the optical fibers 1 and 1. In other words, the outer diameter of the wire 60 of the light leakage generation optical fiber 6 is the same as the outer diameter of the wires 10 and 10 of the optical fibers 1 and 1.

The core diameter (diameter) of the core 61 of the light leakage generation optical fiber 6 is greater than the core diameter of the cores 11 and 11 of the optical fibers 1 and 1. Both ends of the light leakage generation optical fiber 6 are fused with the respective one end of the optical fibers 1 and 1, so that the optical axis thereof matches with the optical axes of the optical fibers 1 and 1.

Here both ends of the light leakage generation optical fiber 6 are fused with the respective one end of the optical fibers 1 and 1, whereby the fused portions 2 and 2 are formed respectively. The core diameter changes from small to large in the optical axis direction of the optical fibers 1 and 1, at the fused portion 2 (fused portion 2 at the right side in Fig. 5) between one optical fiber 1 (optical fiber 1 at the right side in Fig. 5) and the light leakage generation optical fiber 6 as the boundry, therefore little connection loss is generated and the light leakage generation portion 3 is not formed.

However in the fused portion 2 (fused portion 2 at the left side in Fig. 5) between the light leakage generation optical fiber 6 and the other optical fiber 1 (optical fiber 1 at the left side in Fig. 5), the core diameter changes from large to small in the optical axis direction of the optical fibers 1 and 1, at the fused portion 2 as the boundary, therefore the light leakage generation portion 3 is formed in the fused portion 2.

In the light leakage generation optical fiber 6 and the other optical fiber 1 are single mode fibers, the quantity of leaked light in the light leakage generation portion 3 changes according to the difference between the light distribution state (intrinsic mode), which is determined by the refractive index distribution on the cross-section which intersects orthogonally with the optical axis direction of the light leakage generation optical fiber 6, and the refractive index distribution of the cross-section which intersects orthogonally with the optical axis direction of the other optical fiber 1.

If the light leakage generation optical fiber 6 and the other optical fiber 1 are multi-mode fibers, the quantity of leaked light changes according to the area difference between the sectional area of the core 61 of the light leakage generation optical fiber 6 and the sectional area of the core 11 of the other optical fiber 1. Therefore the quantity of leaked light increases as the area difference of the core 11 increases regardless whether single mode fibers or multi-mode fibers are used for the light leakage generation optical fiber 6 and the other optical fiber 1.

Therefore in the case of the hot line detection device of the present embodiment, the light leakage generation portion 3 can be formed by selecting an appropriate core diameter of the light leakage generation optical fiber 6, which is sandwiched between the respective one end of the two optical fibers 1 and 1, and fusing both ends of the light leakage generation optical fiber 6 with the respective one end of the two optical fibers 1 and 1. This makes it possible to secure the quantity of the leaked light required for the hot line detection, and to form the light leakage generation portion 3 without changing the conditions of fusion.

In the case of the hot line detection device of the present embodiment, the refractive index of the core 61 of the light leakage generation optical fiber 6 and the refractive index of the core 11 of the other optical fiber 1 are the same, and a part of the light flows from the core 61 of the light leakage generation optical fiber 6 to the clad 12 of the other optical fiber 1, as bold arrows in Fig. 6A show.

However if the refractive index of the core 61 of the light leakage generation optical fiber 6 is different from the refractive index of the core 11 of the other optical fiber 1, the quantity of leaked light generated in the light leakage generation portion 3 can be increased, and hot line can be detected more accurately.

For example, in the case of using an SI type multi-mode fiber for the optical fibers 1 and 1 and the light leakage generation optical fiber 6, if the refractive index of the other optical fiber 1, of which core diameter is small, is lower than the refractive index of the optical fiber for the light leakage generation 6, of which core diameter is large, refraction occurs in the fused portion 2 between the light leakage generation optical fiber 6 and the other optical fiber 1. Therefore as Fig. 6B shows, light spreads wider in the wire 10 of the other optical fiber 1, and light of which supplementary angle of incidence in the boundary of the core 11 and the clad 12 of the other optical fiber 1 is greater than the critical supplementary angle of total reflection is refracted, and enters the clad 12 of the other optical fiber 1, so the quantity of the leaked light increases.

According to the present embodiment, the core diameter of the light leakage generation optical fiber 6 is greater than the core diameter of the optical fibers 1 and 1, but the present invention is not limited to this. In other words, a light leakage generation optical fiber 6, of which core diameter is smaller than those of the optical fibers 1 and 1, may be used, and in this case, the light leakage generation portion 3 is formed on the fused portion 2 between one optical fiber 1 and the light leakage generation optical fiber 6, and the light leakage generation portion 3 is not generated on the fused portion 2 between the light leakage generation optical fiber 6 and the other optical fiber 1.

### (Embodiment 4)

Fig. 7A is a diagram depicting a general configuration of a hot line detection device according to Embodiment 4 of the present invention, Fig. 7B is a cross-sectional view of the B-B cross-section in Fig. 7A, Fig. 7C shows the refractive index distribution of the B-B cross-section, Fig. 7D is a cross-sectional view of the D-D cross-section in Fig. 7A, and Fig. 7E shows the refractive index distribution of the D-D cross-section.

The basic configuration of the hot line detection device of the present embodiment is generally the same as Embodiment 3. The difference is that, as Fig. 7 shows, the light leakage generation portion 3 is formed by connecting the respective end of the optical fibers 1 and 1, so as to sandwich a light leakage generation optical fiber 7, of which core diameter is the same as those of the optical fibers 1 and 1 and the refractive index of the core 71 is different from the core 11 of the optical fibers 1 and 1. Illustration and description of the other configuration, which is the same as Embodiment 1, are omitted.

The light leakage generation optical fiber 7 is constituted by quartz glass fiber, just like the optical fibers 1 and 1. Here the outer diameter of the clad 72 of the light leakage generation optical fiber 7 is the same as the outer diameter of the clads 12 and 12 of the optical fibers 1 and 1. In other words, the outer diameter of the wire 70 of the light leakage generation optical fiber 7 is the same as the outer diameter of the wires 10 and 10 of the optical fibers 1 and 1. The core diameter of the core 71 of the light leakage generation optical fiber 7 is also the same as the core diameter of the cores 11 and 11 of the optical fibers 1 and 1. Both ends of the light leakage generation optical fiber 7 in the optical axis direction are fused with each one end of the optical fibers 1 and 1 respectively, so that the optical axis thereof matches with the optical axis of the optical fibers 1 and 1. In the present embodiment, an SI type multi-mode fiber is used for the optical fibers 1 and 1, and a GI type multi-mode fiber, of which numerical aperture (NA) is the same as those of the optical fibers 1 and 1, is used for the light leakage generation optical fiber 7, for example.

Both ends of the light leakage generation optical fiber 7 and the respective one end of the optical fibers 1 and 1 are fused, whereby the fused portions 2 and 2 are formed respectively, and in the optical axis direction of the optical fibers 1 and 1, the SI type multi-mode fiber changes into GI type multi-mode fiber, at the fused portion 2 (fused portion 2 at the right side in Fig. 7A) between one optical fiber 1 (optical fiber 1 at the right side in Fig. 7A) and the light leakage generation optical fiber 7 as the boundary. Thereby the light leakage generation portion 3 is formed in the fused portion 2 at the right side.

On the other hand, in the boundary at the fused portion 2 (fused portion 2 at the left side in Fig. 7A) between the light leakage generation optical fiber 7 and the other optical fiber 1 (optical fiber 1 at the left side in Fig. 7A) in the optical axis direction of the optical fibers 1 and 1, the GI type multi-mode fiber changes into SI type multi-mode fiber, therefore the light leakage generation portion 3 is not formed. This aspect will now be described with reference to Fig. 8A to Fig. 8D.

Fig. 8A is a diagram depicting an optical path of the SI type multi-mode fiber, Fig. 8B is a diagram depicting an optical path of the GI type multi-mode fiber, Fig. 8C is a diagram depicting the optical path near the fused portion 2 at the right side in Fig. 7A, and Fig. 8D is a diagram depicting the optical path near the fused portion 2 at the left side in Fig. 7A.

The SI type multi-mode fiber has a step-formed refractive index distribution where the portion of the core 11 is high and the portion of the clad 12 is low, as shown in Fig. 7C, so the light having a maximum supplementary angle of incidence exists at any position in the diameter direction (x direction) of the optical fiber 1, as the bold arrows in Fig. 8A show.

The GI type multi-mode fiber, on the other hand, has a refractive index distribution of the core 11, which changes in the convex curve facing up with the refractive index n1 at the peak, as shown in Fig. 7E, so the supplementary angle of incidence of the light changes according to the position in the diameter direction (x direction) of the optical fiber 7, as the bold arrows in Fig. 8B show.

In other words, in the case of the light leakage generation optical fiber 7 constituted by the GI type multi-mode fiber, light of which supplementary angle of incidence is large exists in the core 71 in a portion near the center of the core 71, but only light of which supplementary angle of incidence is small exists in an edge portion near the clad 72, therefore the locus of the light vacillates in sine wave form.

As a consequence in the core 71 of the light leakage generation optical fiber 7 constituted by the GI type multi-mode fiber, light of which supplementary angle of incidence is large enters the edge portion near the clad 72 from one optical fiber 1 constituted by the SI multi-mode fiber, as shown in Fig. 8C, then the light does not remain within the core 71, and leaks to the clad 72.

On the other hand, as shown in Fig. 8D, even if light enters from the light leakage generation optical fiber 7, constituted by the GI type multi-mode fiber, to the other optical fiber 1 constituted by the SI multi-mode fiber, loss is not generated.

As described above, according to the hot line detection device of the present embodiment, the light leakage generation optical fiber 7 constituted by the GI type multi-mode fiber is sandwiched by the optical fibers 1 and 1 constituted by the SI type multi-mode fibers, therefore the quantity of the leaked light required for the hot line detection can be secured with more certainty, and the light leakage generation portion 3 can be formed without changing the conditions of the fusion.

In the present embodiment, an SI type multi-mode fiber is used for the optical fibers 1 and 1, and a GI type multi-mode fiber of which NA is the same as the optical fibers 1 and 1 is used for the light leakage generation optical fiber 7, but the present invention is not limited to this.

In other words, an SI type multi-mode fiber may be used for the optical fibers 1 and 1, and an SI type multi-mode fiber, of which core diameter is the same as the optical fibers 1 and 1 and the NA is different from (smaller than) the optical fibers 1 and 1, may be used for the optical fiber for the light leakage generation 7.

A GI type multi-mode fiber may be used for the optical fibers 1 and 1, and an SI type multi-mode fiber of which core diameter and NA are both the same as those of the optical fibers 1 and 1 may be used for the light leakage generation optical fiber 7.

In this case, the light leakage generation portion 3 is formed in the fused portion 2 between the other optical fiber 1 and the light leakage generation optical fiber 7, where the SI type multi-mode fiber changes into GI type multi-mode fiber, and the light leakage generation portion 3 is not formed in the fused portion 2 between the one optical fiber 1 and the light leakage generation optical fiber 7.

### (Embodiment 5)

Fig. 9A is a diagram depicting a general configuration of a hot line detection device according to Embodiment 5 of the present invention, Fig. 9B is a cross-sectional view of the B-B cross-section in Fig. 9A, Fig. 9C shows the refractive index distribution of the B-B cross-section, Fig. 9D is a cross-sectional view of the D-D cross-section in Fig. 9A, and Fig. 9E shows the refractive index distribution of the D-D cross-section.

The basic configuration of the hot line detection device of the present embodiment is generally the same as Embodiment 1, but the difference is that, as Fig. 9A shows, the light leakage generation portion 3 is formed by connecting the respective one end of the optical fibers 1 and 1 so as to sandwich a fiber 8 which is constituted by a same material (quartz glass) as the clads 12 and 12 of the optical fibers 1 and 1 and of which refractive index is uniform.

Here the refractive index of the fiber 8 is set to the same value as the refractive index of the clads 12 and 12 of the optical fibers 1 and 1. Illustration and description of the other configuration, which is the same as Embodiment 1, are omitted.

According to the hot line detection device of the present embodiment, the fused portions 2 and 2 are formed by fusing both ends of the fiber 8 and the respective one end of the optical fibers 1 and 1, and light, other than the light that reaches the core 11 of the other optical fiber 1, out of the light which spread and entered from the core 11 of one optical fiber 1 to the fiber 8, becomes leaked light.

Thus according to the hot line detection device of the present embodiment, the light leakage generation portion 3 is formed by the optical fibers 1 and 1 sandwiching the fiber 8, which is constituted by the same material as the clads 12 and 12 of the optical fibers 1 and 1, and of which refractive index is uniform.

Therefore the required quantity of leaked light can be secured with more certainty, and the light leakage generation unit 3 can be formed without changing the conditions of fusion.

### (Embodiment 6)

Fig. 10 is a diagram depicting a general configuration of a hot line detection device according to Embodiment 6 of the present invention. As Fig. 10 shows, the hot line detection device of the present embodiment is **characterized in that** a plurality of light receiving element chips 51 and 52, which can independently detect a plurality of (two in this case) lights having different wavelength bands, are disposed.

In the present embodiments, a composing element the same as that of Embodiments 1 to 5 is denoted with the same reference numeral, for which description is omitted. The optical fibers 1 and 1 are the same as those of Embodiment 1. In the optical fibers 1 and 1, the length of the portion where the outer circumferential surface of the wire 10 is exposed is about 10 mm, which is the same as Embodiment 1. The light receiving element chips 5 are disposed at a predetermined length (e.g. about 2 to 5 mm) distant from the light leakage generation portion 3 in the optical axis direction of the other optical fiber 1, just like Embodiment 1.

As light that propagates the optical fibers 1 and 1, two lights having different wavelength bands, such as light of which wavelength is 1550 nm and light of which wavelength is 850 nm, are assumed. Two lights having different band wavelengths are not limited to these, but light of which wavelength is 1310 nm and light of which wavelength is 850 nm, for example, may be used. Fig. 10 shows the case of using the light of which wavelength is 1550 nm and the light of which wavelength is 850 nm.

The transparent adhesive layer 4 is constituted by epoxy resin or acrylic resin, which are adhesives transparent to light have these wavelengths.

For each light receiving element chips 51 and 52, photodiode chips, of which crystal materials are different from each other, can be used. Here it is assumed to use the light of which wavelength is 1550 nm and light of which wavelength is 850 nm for the light that propagates the optical fiber 1, that is, light used for optical communication. Therefore for the light receiving element chip 51, an InGaAs photodiode chip which has high light receiving sensitivity in a 1.5 µm band wavelength area is used.

For the light receiving element chip 52, an Si photodiode chip which has high light receiving sensitivity in an 0.8 µm band wavelength area is used. The Si photodiode has no light receiving sensitivity for light in a 1 µm band. The InGaAs photodiode has light receiving sensitivity for a 1.3 µm band and 1.5 µm band light, and has very low light receiving sensitivity for a 0.8 µm band light.

Now the refractive index distribution of the optical line A will be described with reference to Fig. 11A to Fig. 11D. Fig. 11A to Fig. 11D are diagrams depicting the refractive index distribution in the case of using a single mode fiber as the optical fiber, where Fig. 11A shows a general configuration of the optical fibers 1 and 1, Fig. 11B shows the refractive index distribution of the B-B cross-section in Fig. 11A, Fig. 11C shows the refractive index distribution of the C-C cross-section in Fig. 11A, and Fig. 11D shows the refractive index distribution of the D-D cross-section in Fig. 11A.

In Fig. 11A to Fig. 11D, a single mode fiber is used for the optical fibers 1 and 1. Description on the refractive index distribution in Fig. 11B to Fig. 11D, which is the same as the refractive index distribution in Fig. 2B to Fig. 2D, is omitted.

Fig. 12A to Fig. 12D are diagrams depicting the refractive index distribution in the case of using a GI type multi-mode fiber for the optical fibers 1 and 1, where Fig. 12A shows the general configuration of the optical fibers 1 and 1, Fig. 12B shows the refractive index distribution of the B-B cross-section in Fig. 12A, Fig. 12C shows the refractive index distribution of the C-C cross-section in Fig. 12A, and Fig. 12D shows the refractive index distribution of the D-D cross-section in Fig.12A.

Description of the refractive index distribution in Fig. 12B to Fig. 12D, which is the same as the refractive index distribution in Fig. 3B to Fig. 3D, is omitted.

Most of the leaked light generated in the light leakage generation portion 3 propagates through the wire 10 while repeating total reflection, pass through the interface between the clad 12 and the transparent adhesive layers 4 and 4, and reach the light receiving surfaces of the light receiving element chips 51 and 52. In Fig. 10, a dashed line arrow shows an example of the traveling path of the ray P1 of the light of which wavelength is 1310 nm, out of the leaked light generated in the light leakage generation portion 3, and the solid line arrow shows an example of the traveling path of the ray P2 of the light of which wavelength is 850 nm.

According to the hot line detection device of the present embodiment described above, a plurality of light receiving element chips 51 and 52, which can independently detect a plurality of lights having different band wavelengths, are disposed. Therefore in addition to the effect of Embodiment 1, hot line can be easily detected for each of the plurality of lights for the optical line A where a plurality of lights having different band wavelengths propagate.

The detection sensitivity of the light receiving element chip 51 or 52 is determined by the total of four aspects (1) to (4): (1) light receiving sensitivity of the light receiving element chip 51 or 52 with respect to the detection target wavelength; (2) quantity of the leaked light having each detection target wavelength in the light leakage generation portion 3; (3) efficiency of the leaked light having the detection target wavelength reaching the light receiving element chip 51 or 52; and (4) area of the light receiving surface of the light receiving element chip 51 or 52.

Here according to the hot line detection device of the present embodiment, detection target wavelength and crystal material are different between the light receiving element chips 51 and 52, so the values of the light receiving sensitivity (1) and the area of the light receiving surface (4) are different between the two light receiving element chips 51 and 52. The quantity of the leaked light having each detection target wavelength in the light leakage generation portion 3 (2) is about the same, so if the light receiving sensitivity (1) and the area of the light receiving surface (4) are different between the two light receiving element chips 51 and 52, the detection sensitivities of the light receiving element chips 51 and 52 can be balanced to approximately a same value by adjusting the reach efficiency (3).

According to the hot line detection device of the present embodiment, it is preferable to dispose the light receiving element chip 51 having lower detection sensitivity closer to the light leakage generation portion 3 when the plurality of light receiving element chips 51 and 52 are disposed. Thereby the difference of detection sensitivities between the light receiving element chips 51 and 52 can be decreased so that detection sensitivities of the light receiving element chips 51 and 52 can be balanced to approximately a same value, and the hot line can be detected more accurately for each light.

### (Embodiment 7)

Fig. 13 is a diagram depicting a general configuration of a hot line detection device according to Embodiment 7 of the present invention. The basic configuration of the hot line detection device of the present embodiment is roughly the same as that of Embodiment 6. The difference is that, as Fig. 13 shows, the light receiving element chips 51 and 52 are disposed so that the distance of the light receiving element chips 51 and 52 from the light leakage generation portion 3 ("specified length" described in Embodiment 1) become the same. Here the light receiving element chip 51 and the light receiving element chip 52 are disposed so as to face each other, sandwiching the other optical fiber 1. A composing element the same as that in Embodiments 1 to 6 is denoted with a same reference numeral, for which description is omitted.

In the case of the hot line detection device of Embodiment 6, a plurality of light receiving element chips 51 and 52 are disposed along the optical axis direction of the other optical fiber 1. Therefore a part of the light having a detection target wavelength to be detected by the light receiving element chip 52 disposed at the downstream side (left side in Fig. 10) enters the light receiving element chip 51 disposed at the upstream side. This may decrease the leaked light having the detection target wavelength which reaches the light receiving element chip 52, drop the efficiency of the leaked light reaching the light receiving element chip 52, and decrease the output current.

Whereas in the hot line detection device of the present embodiment, the plurality of light receiving element chips 51 and 52 are disposed so that the respective distance from the light leakage generation portion 3 become the same. Hence the efficiency of leaked light, reaching the light receiving chips 51 and 52 respectively, can be roughly the same.

In Fig. 13, not only the ray P1 of the light having a detection target wavelength, but also the ray P2 having a detection target wavelength of the light receiving element chip 52 enters the light receiving element chip 51. However the ray P2, which passes through the light path reaching the light receiving element chip 51, is originally a ray P2 which does not reach the light receiving element chip 52, and does not decrease the efficiency of the leaked light reaching the light receiving element chip 52.

If the distance between the light receiving element chips 51 and 52 and the light leakage generation portion 3 is too short, it is possible that the light intensity distribution of the leaked light from the light leakage generation portion 3 directly influences the output current of the light receiving element chips 51 and 52, and the output current of the light receiving element chips 51 and 52 disperse. Therefore it is preferable to set the predetermined length so that the light generated in the light leakage generation portion 3 totally reflects at least once, and reaches the light receiving element chips 51 and 52. Thereby the light intensity distribution is equalized, and dispersion of the output current of the light receiving element chips 51 and 52 can be suppressed, and stable output of the light receiving element chips 51 and 52 can be implemented.

### (Embodiment 8)

Fig. 14 is a diagram depicting a general configuration of a hot line detection device according to Embodiment 8 of the present invention. The basic configuration of the hot line detection device of the present embodiment is roughly the same as that of Embodiment 6. The difference is that the optical line A is a two-way communication optical line, and as Fig. 14 shows, the light receiving element chips 51 and 52 and the light receiving element chips 51 and 52 are disposed on both sides of the light leakage generation portion 3 in the optical axis direction. In the present embodiment, a composing element the same as that of Embodiments 1 to 7 is denoted with the same reference numeral, for which description is omitted.

As Fig. 14 shows, in the present embodiment, a plurality of (two in this case) lights which propagate from right to left and have mutually different wavelength bands, and a plurality of (two in this case) lights which propagate from left to right and have mutually different wavelength bands propagate the optical fibers 1 and 1. The light paths of the former plurality of lights are indicated by solid line arrows, and the light paths of the latter plurality of lights are indicated by broken line arrows.

According to the hot line detection device of the present embodiment, the light receiving element chips 51 and 52 disposed at the right side receive the leaked light propagating the light paths indicated by the broken line, that is, from left to right, and the light receiving element chips 51 and 52 disposed at the left side receive the leaked light propagating the light paths indicated by the solid ine, that is, from right to left.

Hence each of the light receiving element chips 51, 52, 51 and 52, can prevent the light, of which propagating direction is the opposite of the detection target light, from being reached.

In Fig. 14, it is preferable that the light receiving element chips 51 and 52 at the left side, and the light receiving element chips 51 and 52 at the right side, are disposed symmetrically with respect to the cross-section that contains the fused portion 2. In the present embodiment, the optical line A in a line where lights having a plurality of wavelength bands are transmitted both ways, but it is not necessary that lights having a same number of wavelength bands are transmitted in both directions, and lights having a different number of wavelength bands may be transmitted in each direction. And only light with one wavelength band may be transmitted in both directions.

The method for forming the light leakage generation portion 3 in Embodiments 6 and 7 is not limited to the forming method described in Embodiment 1, but the light leakage generation portion 3 may be formed using the method of Embodiment 2.

The light leakage generation portion 3 may be formed by connecting the respective one end of the optical fibers 1 and 1 so as to sandwich the light leakage generation optical fiber 6, of which core diameter is different from that of optical fibers 1 and 1, as shown in Embodiment 3.

The light leakage generation portion 3 may be formed by connecting the respective one end of the optical fibers 1 and 1 so as to sandwich the light leakage generation optical fiber 7, of which core diameter is the same as that of the optical fibers 1 and 1, and the refractive index is different from that of the core 11 of the optical fibers 1 and 1, as shown in Embodiment 4.

The light leak generation portion 3 may also be formed by connecting the respective one end of the optical fibers 1 and 1 so as to sandwich a fiber which is constituted by a same material (quartz glass) as the clads 12 and 12 of the optical fibers 1 and 1, and of which refractive index is uniform, as shown in Embodiment 5.

### (Embodiment 9)

Fig. 15A is a diagram depicting a general configuration of a hot line detection device according to Embodiment 9 of the present invention. Fig. 15B is a diagram depicting a general configuration of a comparison example of the hot line detection device according to Embodiment 9 of the present invention. In the present embodiment, a composing element the same as that of Embodiments 1 to 8 is denoted with the same reference numeral, for which description is omitted.

The basic configuration of the hot line detection device of the present embodiment is the same as that of the hot line detection device of Embodiment 1. The difference is that an area of the transparent adhesive layer 4, which contacts the clad 12 of the other optical fiber 1, is limited so that the leaked light from the light leakage generation portion 3 does not leak into the air via the transparent adhesive layer 4, in the space between the light receiving element chip 5 and the light leakage generation portion 3.

As Fig. 15B shows, in the case of the comparison example, the transparent adhesive layer 4 spreads wide toward the light leakage generation portion 3 side in the optical axis direction of the optical fibers 1 and 1. Therefore in the space between the light receiving element chip 5 and the light leakage generation portion 3, a part of the leaked light from the light leakage generation portion 3 leaks to the outside (into the air) via the transparent adhesive layer 4. This decreases the efficiency of the leaked light reaching the light receiving element chip 5.

As Fig. 15A shows, in the case of the hot line detection device of the present embodiment, on the other hand, the contact area of the clad 12 of the other optical fiber 1 and the transparent adhesive layer 4 is limited so that the leaked light from the light leakage generation portion 3 is not leaked into the air via the transparent adhesive layer 4, in the space between the light receiving element chip 5 and the light leakage generation portion 3.

In concrete terms, as Fig. 15A shows, the size of the contact area of the clad 12 of the other optical fiber 1 and the transparent adhesive layer 4 is smaller than the size of this area shown in Fig. 15B.

To implement this, the coating amount of adhesive to be the transparent adhesive layer 4, and the load applied when the light receiving element chip 5 is adhered, are appropriately set. In the present embodiment, the size of the contact area of the transparent adhesive layer 4 and the clad 12 is set to be a size slightly larger than the size of the light receiving element chip 5, but the present invention is not limited to this. In other words, the contact area of the transparent adhesive layer 4 and the clad 12 may be formed to have the same size as the light receiving surface of the light receiving element chip 5. In the present embodiment, the size of the light receiving surface of the light receiving element chip 5 and the size of the light receiving element chip 5 are approximately the same.

As described above, according to the hot line detection device of the present embodiment, not only can the effect of Embodiment 1 be implemented, but also the efficiency of the leaked light reaching the light receiving element chip 5 can be further improved since the size of the contact area of the transparent adhesive layer 4 and the clad 12 is limited.

### (Embodiment 10)

Fig. 16 is a diagram depicting a general configuration of a hot line detection device according to Embodiment 10 of the present invention. The basic configuration of the hot line detection device of the present embodiment is roughly the same as that of Embodiment 1. The difference is that, as Fig. 16 shows, a part of the light receiving surface of the light receiving element chip 5 is an effective light receiving area 5a in which the light receiving sensitivity is approximately uniform, and the size of the contact area of the transparent adhesive layer 4 and the clad 12 is set to be smaller than the size of the light receiving element chip 5, and is larger than the effective light receiving area 5a. Description on the other configuration, which is the same as Embodiment 9, is omitted.

By this configuration, the amount of using adhesive for forming the adhesive layer 4 can be decreased, and efficiency of light reaching the light receiving element chip 5 can be improved.

### (Embodiment 11)

Fig. 17A is a diagram depicting a general configuration of a hot line detection device according to Embodiment 11 of the present invention. Fig. 17B is a diagram depicting a general configuration of a comparison example of the hot line detection device according to Embodiment 11 of the present invention. In the present embodiment, a comprising element the same as that of Embodiments 1 to 10 is denoted with the same reference numeral, for which description is omitted.

The basic configuration of the hot line detection device of the present embodiment is roughly the same as that of the hot line detection device of Embodiment 9. The difference is that, as Fig. 17A shows, a reflection portion 6x, which is constituted by a metal film, for reflecting the leaked light generated in the light leakage generation portion 3, and which limits the size of the contact area of the transparent adhesive layer 4 and the clad 12 at the light leakage generation portion 3 side, is coated on the outer circumferential surface of the other optical fiber 1 in the space between the light receiving element chip 5 and the light leakage generation portion 3.

Here the reflection portion 6x is coated throughout the entire circumference of the clad 12 in the circumferential direction. In other words, the reflection portion 6x is formed to be concentric with the clad 12.

For the material of the metal film constituting the reflection portion 6x, a metal material of which reflectance is higher, with respect to the light propagating the optical fiber 1, can be used. The light used for optical communication is normally infrared light of which wavelength is 850 nm, 1310 nm or 1550 nm, for example. Hence it is preferable to use Au, Ag, Al and Cu, for example, for the metal material, and it is especially preferable to use Au, which is superb in oxidation resistance.

Therefore according to the hot line detection device of the present embodiment, the leaked light generated in the light leakage generation portion 3 can be reflected by the reflection portion 6x constituted by a metal film. Therefore compared with the comparison example shown in Fig. 17B, where the contact area of the transparent adhesive layer 4 and the clad 12 spreads widely toward the light leakage generation portion 3 side, the efficiency of the leaked light reaching the light receiving element chip 5 can be further improved. Even if the adhesive spreads toward the light leakage generation portion 3 side during manufacture, the contact area of the transparent adhesive layer 4 and the clad 12 is limited by the reflection portion 6x, so a drop in efficiency of the leaked light reaching the light receiving element chip 5 can be prevented.

### (Embodiment 12)

Fig. 18A is a diagram depicting a general configuration of a hot line detection device according to Embodiment 12 of the present invention. Fig. 18B is a diagram depicting a general configuration of a comparison example of the hot line detection device according to Embodiment 12 of the present invention. In the present embodiment, a composing element the same as that of Embodiments 1 to 11 is denoted with the same reference numeral, for which description is omitted.

The basic configuration of the hot line detection device of the present embodiment is roughly the same as that of the hot line detection device of Embodiment 9. The difference is that, as Fig. 18A shows, a reflection portion 7x, which is constituted by a porous glass film for totally reflecting the leaked light generated in the light leakage generation portion 3, and which limits the size of the contact area of the transparent adhesive layer 4 and the clad 12, at the light leakage generation portion 3 side, is coated on the outer circumferential surface of the other optical fiber 1 in the space between the light receiving element chip 5 and the light leakage generation portion 3.

Here the reflection portion 7x is coated throughout the entire circumference of the clad 12 in the circumferential direction. In other words, the reflection portion 7x is formed to be concentric with the clad 12.

For the porous glass film constituting the reflection portion 7x, a porous glass film, of which average refractive index (equivalent refractive index) is about 1.01 to 1.05, close to the refractive index of air, that is 1, can be used. In other words, for the porous glass film, a porous glass film, of which refractive index is sufficiently lower than the refractive index of the transparent adhesive layer 4 and the refractive index of the clad 12, can be used.

For the material of the porous glass film, silica aerogel, for example, can be used.

Therefore according to the hot line detection device of the present embodiment, the leaked light generated in the light leakage generation portion 3 can be totally reflected by the reflection portion 7x. Thus compared with the comparison example shown in Fig. 18B, where the contact area of the transparent adhesive layer 4 and the clad 12 spreads widely toward the light leakage generation portion 3 side, the efficiency of the leaked light reaching the light receiving element chip 5 can be further improved. Even if the adhesive spread toward the light leakage generation portion 3 side during manufacture, the contact area of the transparent adhesive layer 4 and the clad 12 is limited by the reflection portion 7x, so a drop in efficiency of the leaked light reaching the light receiving element chip 5 can be prevented.

### (Embodiment 13)

Fig. 19 is a diagram depicting a general configuration of a hot line detection device according to Embodiment 13 of the present invention. In the present embodiment, a composing element the same as that of Embodiments 1 to 12 is denoted with the same reference numeral, for which description is omitted.

The basic configuration of the hot line detection device of the present embodiment is roughly the same as Embodiment 11. The difference is that, as Fig. 19 shows, the reflection portion 6x extends over the optical fibers 1 and 1. In the present embodiment, the reflection portion 6x is formed extending over the optical fibers 1 and 1, but it is sufficient if the reflection portion 6x is formed at least roughly on the entire area between the transparent adhesive layer 4 and the light leakage generation portion 3 in the optical axis direction of the optical fibers 1 and 1.

In the case of the hot line detection device of Fig. 17A described in Embodiment 11, a portion where the clad 12 of the other optical fiber 1 is exposed exists between the reflection portion 6x and the light leakage generation portion 3. Therefore depending on the operating environment, condensation may be generated on the surface of the clads 12 and 12. If such condensation is generated, a part of the leaked light generated in the light leakage generation portion 3 may leak into the air via water drops, because the refractive index of water is about 1.3, and the refractive index difference between the clad 12 and water is smaller than the refractive index difference between the clad 12 and air, and as a result, the efficiency of the leaked light reaching the light receiving element chip 5 may drop.

Whereas in the hot line detection device of the present embodiment, the reflection portion 6x is formed on the entire area between the transparent adhesive layer 4 and the leakage generation portion 3. Therefore the generation of condensation on the surface of the clad 12 of the other optical fiber 1 in the space between the transparent adhesive layer 4 and the leakage generation portion 3 can be prevented. As a result, leakage of the leaked light generated in the light leakage generation portion 3 into the air via water drops can be prevented, and a drop in efficiency of the leaked light reaching the light receiving element chip 5 can be prevented.

The same effect can also be implemented by using the reflection portion 7x described in Embodiment 12, instead of the reflection portion 6x of the present embodiment.

The technical characteristics of the above mentioned hot line detection device are summarized as follows.

(1) The hot line detection device according to an aspect of the present invention is a hot line detection device for detecting whether an optical line, including two optical fibers, is in a hot line state or not, including: a light leakage generation portion which is formed by connecting the two optical fibers so that a refractive index distribution in a portion of connection of the two optical fibers is different from a refractive index distribution of another portion in an optical axis direction, and which leaks a part of a light propagating a core of one optical fibers into a clad of the other optical fiber; and a light receiving element which adheres to an outer circumferential surface of the clad of the other optical fiber via a transparent adhesive layer so as to detect a light leaked by the light leakage generation portion.

According to this configuration, the light leakage generation portion, for leaking a part of the light propagating the core of one optical fiber into the clad of the other optical fiber, is disposed. Therefore compared with a configuration where two optical fibers are fused so that the connection loss is minimized, the absolute quantity of leaked light can be increased.

The light receiving element chip adheres to the outer circumferential surface of the clad of the other fiber via the transparent adhesive layer. Therefore the distance between the light receiving element chip and the outer circumferential surface of the clad of the other optical fiber can be decreased. As a result, the efficiency of the leaked light reaching the light receiving element can be improved.

Further, compared with the configuration where air intervenes between the light receiving element chip and the outer circumferential surface of the clad of the other optical fiber, more leaked light enters from the clad to the transparent adhesive layer, which has a higher refractive index than air, and the efficiency of the leaked light reaching the light receiving element can be improved. As a result, more stable hot line detection can be implemented.

(2) In the above hot line detection device, it is preferable that the light leakage generation portion is formed by fusing the two optical fibers so as to create an intermediate refractive index area of which refractive index is higher than the refractive index of the clad of the other portion, and is lower than the refractive index of the core of the other portion.

According to this configuration, the light leakage generation portion can be formed without adding a separate element for light leakage generation.

(3) In the above hot line detection device, it is preferable that the light leakage generation portion is formed by individually melting one end of the one optical fiber and one end of the other optical fiber before fusing the two optical fibers so that the refractive index distribution of each of the one ends becomes different from the refractive index distribution of the other portion, and then fusing the one ends together.

According to this configuration, the light leakage generation portion can be formed with more certainty, and the range of the area, where the light leakage generation portion is formed in the cross-section that intersects orthogonally with the optical axis direction, can be wider, and more quantity of leaked light required for hot line detection can be further increased.

(4) In the above hot line detection device, it is preferable that the light leakage generation portion is formed by connecting the two optical fibers sandwiching a light leakage generation optical fiber, which has a core diameter different from that of the two optical fibers.

According to this configuration, the light leakage generation portion can be formed by selecting an appropriate core diameter of the light leakage generation optical fiber, which is inserted between the two optical fibers. Therefore the quantity of the leaked light required for hot line detection can be secured with more certainty, and the light leakage generation portion can be formed without changing the conditions of fusion.

(5) In the above hot line detection device, it is preferable that the refractive index of the core of the light leakage generation optical fiber is different from the respective refractive index of the cores of the two optical fibers.

According to this configuration, the light leakage generation portion can be constructed by selecting an appropriate light leakage generation optical fiber, of which refractive index is different from the refractive index of the respective cores of the two optical fibers.

(6) In the above hot line detection device, it is preferable that the light leakage generation portion is formed by connecting the two optical fibers sandwiching a light leakage generation optical fiber, of which core diameter is the same as that of the two optical fibers and refractive index of the core is different from that of the two optical fibers.

According to this configuration, the light leakage generation portion can be formed by selecting an appropriate optical fiber, of which core diameter is the same as that of the two optical fibers, and the refractive index of the core is different from that of the two optical fibers. Therefore the quantity of the leaked light required for hot line detection can be secured with more certainty, and the light leakage generation portion can be formed without changing the conditions of fusion.

(7) In the hot line detection device, it is preferable that the light leakage generation portion is formed by connecting the two optical fibers sandwiching a fiber which is constituted by a same material as the clads of the two optical fibers, and of which refractive index is uniform.

According to this configuration, the light leakage generation portion is formed by sandwiching the fiber, which is constituted by a same material as the clads of the two optical fibers and of which refractive index is uniform, between two optical fibers. Therefore the quantity of the leaked light required for hot line detection can be secured with more certainty, and the light leakage generation portion can be formed without changing the conditions of fusion.

(8) In the above hot line detection device, it is preferable that the light receiving element is a plurality of light receiving elements which can independently detect a plurality of lights which are different in at least one of a band wavelength and a transmission direction.

According to this configuration, a plurality of light receiving elements, which can independently detect a plurality of lights which are different in at least one of wavelength band and transmission direction, are disposed. Therefore hot line detection can be performed independently for a plurality of lights which are different in at least one of band wavelength and transmission direction.

(9) In the above hot line detection device, it is preferable that the plurality of light receiving elements are disposed to have a same distance from the light leakage generation portion.

According to this configuration, the efficiency of leaked light reaching each light receiving element can be approximately the same.

(10) In the above hot line detection device, it is preferable that the plurality of light receiving elements are disposed so that the light receiving element having a lower detection sensitivity is disposed closer to the light leakage generation portion.

According to this configuration, the difference of detection sensitivity of each light receiving element can be decreased, and the hot line detection can be performed with more certainty for each of the plurality of lights which are different in at least one of band wavelength and transmission direction.

(11) In the above hot line detection device, it is preferable that the optical line is a two-way communication optical line, and the plurality of light receiving elements are disposed on both sides of the light leakage generation portion in the optical axis direction.

According to this configuration, light, of which transmission direction is the opposite of the detection target light of each light receiving element, can be prevented from reaching the light receiving element.

(12) In the above hot line detection device, it is preferable that an area of the transparent adhesive layer, which contacts the clad of the other optical fiber, is limited so that the leaked light from the light leakage generation portion does not leak into an air via the transparent adhesive layer, in a space between the light receiving element and the light leakage generation portion.

According to this configuration, the contact area of the transparent adhesive layer and the clad of the other optical fiber is limited. Therefore the leaked light from the light leakage generation portion can be prevented from leaking into the air via the transparent adhesive layer in the space between the light receiving element and the light leakage generation portion. As a result, the efficiency of the leaked light reaching the light receiving element chip can be further improved, and more stable hot line detection can be implemented.

(13) It is preferable that the above hot line detection device further includes: a reflection portion, which is disposed on an outer circumferential surface of the other optical fiber so as to limit the area, and which is constituted by a metal film that reflects the leaked light generated in the light leakage generation portion, in the space between the light receiving element and the light leakage generation portion.

According to this configuration, the size of the contact area of the transparent adhesive layer and the clad of the other optical fiber is limited by the reflection portion constituted by a metal film, so leakage of the light from the other optical fiber into air via the adhesive layer can be prevented, and the efficiency of the leaked light reaching the light receiving element can be further improved. Even if adhesive spreads toward the light leakage generation portion side during manufacture, the size of the contact area of the adhesive layer and the other optical fiber is limited by the reflection portion, so a drop in efficiency of the leaked light reaching the light receiving element can be prevented.

(14) It is preferable that the above hot line detection device further includes: a reflection portion which is disposed on an outer circumferential surface of the other optical fiber so as to limit the area, and is constituted by a porous glass film which totally reflects the leaked light generated in the light leakage generation portion, in the space between the light receiving element and the light leakage generation portion.

According to this configuration, the size of the contact area of the transparent adhesive layer and the clad of the other optical fiber is limited by the reflection portion constituted by a porous glass film, so leakage of the light from the other optical fiber into air via the adhesive layer can be prevented, and efficiency of the leaked light reaching the light receiving element can be further improved. Even if the adhesive spreads toward the light leakage generation portion side during manufacture, the size of the contact area of the adhesive layer and the other optical fiber is limited by the reflection portion, so a drop in efficiency of the leaked light reaching the light receiving element can be prevented.

(15) In the above hot line detection device, it is preferable that the reflection portion is formed so as to cover an outer circumference of the clad of the other optical fiber, in a space between the transparent adhesive layer and the light leakage generation portion.

According to this configuration, the generation of condensation on the surface of the clad of the other optical fiber in the space between the transparent adhesive layer and the light leakage generation portion can be prevented. Since direct contact of the clad and water drops, due to condensation, can be prevented, the leakage of the leaked light generated in the light leakage generation portion into air via water drops can be prevented. As a result, a drop in efficiency of the leaked light reaching the light receiving element can be prevented.

## Claims

1. A hot line detection device for detecting whether an optical line, including two optical fibers, is in a hot line state or not, comprising:
a light leakage generation portion which is formed by connecting the two optical fibers so that a refractive index distribution in a portion of connection of the two optical fibers is different from a refractive index distribution of another portion in an optical axis direction, and which leaks a part of a light propagating a core of one optical fiber into a clad of the other optical fiber; and
a light receiving element which adheres to an outer circumferential surface of the clad of the other optical fiber via a transparent adhesive layer so as to detect a light leaked by the light leakage generation portion.

2. The hot line detection device according to Claim 1, wherein
the light leakage generation portion is formed by fusing the two optical fibers so as to create an intermediate refractive index area of which refractive index is higher than the refractive index of the clad of the other portion, and is lower than the refractive index of the core of the other portion.

3. The hot line detection device according to Claim 2, wherein
the light leakage generation portion is formed by individually melting one end of the one optical fiber and one end of the other optical fiber before fusing the two optical fibers so that the refractive index distribution of each of the one ends becomes different from the refractive index distribution of the other portion, and then fusing the one ends together.

4. The hot line detection device according to Claim 1, wherein
the light leakage generation portion is formed by connecting the two optical fibers sandwiching a light leakage generation optical fiber, which has a core diameter different from that of the two optical fibers.

5. The hot line detection device according to Claim 4, wherein
the refractive index of the core of the light leakage generation optical fiber is different from the respective refractive index of the cores of the two optical fibers.

6. The hot line detection device according to Claim 1, wherein
the light leakage generation portion is formed by connecting the two optical fibers sandwiching a light leakage generation optical fiber, of which core diameter is the same as that of the two optical fibers and refractive index of the core is different from that of the two optical fibers.

7. The hot line detection device according to Claim 1, wherein
the light leakage generation portion is formed by connecting the two optical fibers sandwiching a fiber which is constituted by a same material as the clads of the two optical fibers, and of which refractive index is uniform.

8. The hot line detection device according to any one of Claim 1 to Claim 7, wherein
the light receiving element is a plurality of light receiving elements which can independently detect a plurality of lights which are different in at least one of a wavelength band and a transmission direction.

9. The hot line detection device according to Claim 8, wherein
the plurality of light receiving elements are disposed to have a same distance from the light leakage generation portion.

10. The hot line detection device according to Claim 8, wherein
the plurality of light receiving elements are disposed so that the light receiving element having a lower detection sensitivity is disposed closer to the light leakage generation portion.

11. The hot line detection device according to Claim 9 or Claim 10, wherein
the optical line is a two-way communication optical line, and
the plurality of light receiving elements are disposed on both sides of the light leakage generation portion in the optical axis direction.

12. The hot line detection device according to any one of Claim 1 to Claim 11, wherein
an area of the transparent adhesive layer, which contacts the clad of the other optical fiber, is limited so that the leaked light from the light leakage generation portion does not leak into an air via the transparent adhesive layer, in a space between the light receiving element and the light leakage generation portion.

13. The hot line detection device according to Claim 12, further comprising:
a reflection portion, which is disposed on an outer circumferential surface of the other optical fiber so as to limit the area, and which is constituted by a metal film that reflects the leaked light generated in the light leakage generation portion, in the space between the light receiving element and the light leakage generation portion.

14. The hot line detection device according to Claim 12, further comprising:
a reflection portion which is disposed on an outer circumferential surface of the other optical fiber so as to limit the area, and is constituted by a porous glass film which totally reflects the leaked light generated in the light leakage generation portion, in the space between the light receiving element and the light leakage generation portion.

15. The hot line detection device according to Claim 13 or Claim 14, wherein
the reflection portion is formed so as to cover an outer circumference of the clad of the other optical fiber, in a space between the transparent adhesive layer and the light leakage generation portion.
